# EUROPEAN PATENT SPECIFICATION

(11) **EP 4 162 732 B1**
(45) Date of publication and mention of the grant of the patent: **25.02.2026**
(21) Application number: 20733806.2
(22) Date of filing: 22.06.2020
(51) Int. Cl.: H04W 52/02, H04W 24/02, H04W 24/10, H04W 36/32

(54) **REDUCING BATTERY CONSUMPTION OF WIRELESS DEVICES**
REDUZIERUNG DES BATTERIEVERBRAUCHS DRAHTLOSER VORRICHTUNGEN
RÉDUCTION DE LA CONSOMMATION DE BATTERIE DE DISPOSITIFS SANS FIL

(30) Priority: 03.06.2020 EP 20382482
(43) Date of publication of application: 12.04.2023
(73) Proprietor: Telefonaktiebolaget LM ERICSSON (PUBL), 16483 Stockholm (SE)
(72) Inventor: PUENTE PESTAÑA, Miguel Angel, 28007 Madrid (ES); MUÑOZ DE LA TORRE ALONSO, Miguel Angel, 28002 Madrid (ES)
(74) Representative: Ericsson
(86) International application number: PCT/EP2020/067271
(87) International publication number: WO 2021/244761

(56) References cited:
- WO-A1-2019/231435
- WO-A1-2020/066890
- WO-A1-2020/145030
- "3rd Generation Partnership Project; Technical Specification Group Services and System Aspects; Study of Enablers for Network Automation for 5G (Release 16)", 3GPP STANDARD; TECHNICAL REPORT; 3GPP TR 23.791, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.2.0, 11 June 2019 (2019-06-11), pages 1 - 124, XP051753968
- "3rd Generation Partnership Project; Technical Specification Group Services and System Aspects; System architecture for the 5G System (5GS); Stage 2 (Release 16)", vol. SA WG2, no. V16.3.0, 22 December 2019 (2019-12-22), pages 1 - 417, XP051840930, Retrieved from the Internet <URL:ftp://ftp.3gpp.org/Specs/archive/23_series/23.501/23501-g30.zip 23501-g30.docx> [retrieved on 20191222]

## Description

### Technical Field

This disclosure relates to reducing the battery consumption of wireless devices that are connected to a communication network.

### Background

WO 2019/231435 relates to intelligence for detecting and addressing battery life degradation of wireless devices (e.g., Internet of Things devices) in a cellular communications network.

WO 2020/066890 relates to the provision of analytical results/information by a user equipment for performance improvement and supervision.

Wireless devices, also referred to as User Equipments (UEs), are typically battery powered, particularly in the case of smartphones, smart watches, tablets, laptops and remote sensors, e.g. smart meters. The operating system of many types of UE are configured or configurable such that, when the battery level of the UE falls below a certain threshold (typically 15-20% of maximum charge), the UE automatically enters a power saving mode in which some of the UE's capabilities are limited. For example the screen brightness is lowered and non-essential applications are stopped, etc..

Some wireless devices may include a form of "ultra power saving mode" in which the UE capabilities are limited in a more aggressive way, often leaving active only the very basic communication capabilities (e.g. voice) and disabling (totally or intermittently) the other data connections (e.g. mobile data, WiFi, Bluetooth, etc.).

Currently, the only battery information collected by a mobile communication network serving a UE is the type of battery of the UE. In particular the information indicates whether the UE's battery is replaceable and/or rechargeable, and whether the UE includes a battery or not.

The Third Generation Partnership Project (3GPP) Technical Standard (TS) 29.122 v16.5.0 specifies the information collected by the mobile network via exposure Application Program Interfaces (APIs). The UE battery-related information is included in Table 5.10.2.2.2-1 and Table 5.10.2.3.6-1 of 3GPP TS 29.122 v16.5.0:

**Table 5.10.2.2.2-1: Definition of type CpParameterSet**

| **Attribute name** | **Data type** | **Cardinality** | **Description** | **Applicability (NOTE 1)** |
|---|---|---|---|---|
| setld | string | 1 | SCS/AS-chosen correlator provided by the SCS/AS in the request to create a resource fo CP parameter set(s). | |
| self | Link | 0..1 | Link to the resource "Individual CP set Provisioning". This parameter shall be supplied by the SCEF in HTTP responses. | |
| validityTime | DateTime | 0..1 | Identifies when the CP parameter set expires and shall be deleted. If absent, it indicates that there is no expiration time for this CP parameter set. | |
| periodicCommunicationIn dicator | Communication Indicator | 0..1 | Identifies whether UE communicates periodically or on demand. | |
| communicationDurationTi me | DurationSec | 0..1 | Identifies duration time of periodic communication | |
| periodicTime | DurationSec | 0..1 | Identifies interval time of periodic communication | |
| scheduledCommunication Time | ScheduledCom municationTime | 0..1 | Identifies time zone and day of the week when the UE is available for communication. | |
| scheduledCommunication Type | ScheduledCom municationType | 0..1 | Indicates the Scheduled Communication Type. | ScheduledCo mmType_5G |
| | | | May only be present if the "scheduledCommunicationTime" attribute is provided. | |
| stationarylndication | Stationarylndic ation | 0..1 | Identifies whether the UE is stationary or mobile. | |
| **batterylnds** | **array(BatteryIn dication)** | **0..N** | **Indicates the power consumption type(s) of the UE. (NOTE 3x)** | |
| trafficProfile | TrafficProfile | 0..1 | Identifies the type of data transmission. | |
| expectedUmts | array(UmtLocati onArea5G) | 0..N | Identifies the UE's expected geographical movement. The attribute is only applicable in 5G. | ExpectedUM T_5G ExpectedUmt Time_5G |
| | | | (NOTE 2) | |
| expectedUmtDays | array(DayOfWe ek) | 0..6 | Identifies the day(s) of the week. If absent, it indicates every day of the week. | ExpectedUmt Time_5G |
| NOTE 1: Properties marked with a feature as defined in subclause 5.10.4 are applicable as described in subclause 5.2.7. If no features are indicated, the related property applies for all the features. | | | | |
| NOTE 2: The first instance of the attribute represents the start of the location, and the last one represents the stop of the location. | | | | |
| NOTE 3x: If "BATTERY_RECHARGE" is provided, "BATTERY_NO_RECHARGE" shall not be provided simultaneously, vice versa; If "BATTERY_REPLACE" is provided, "BATTERY_NO_REPLACE" shall not be provided simultaneously, vice versa; If "NO_BATTERY" is provided, any value indicating UE powered with battery shall not be provided simultaneously, vice versa. | | | | |

**Table 5.10.2.3.6-1: Enumeration Batterylndication**

| **Enumeration value** | **Description** | **Applicability (NOTE)** |
|---|---|---|
| **BATTERY_RECHARGE** | UE powered with rechargeable battery. | |
| **BATTERY_REPLACE** | UE powered with replaceable battery. | |
| **BATTERY_NO_RECHARGE** | UE powered with no rechargeable battery. | |
| **BATTERY_NO_REPLACE** | UE powered with no replaceable battery. | |
| **NO_BATTERY** | UE not battery powered. | |
| NOTE: Properties marked with a feature as defined in subclause 5.10.4 are applicable as described in subclause 5.2.7. If no features are indicated, the related property applies for all the features. | | |

Currently processes to save power in a UE take place solely on the UE side. This is not optimal and can lead to inefficient UE battery saving due to some or all of the following aspects:
- The network resources (e.g. radio resources) allocated to the UE, for example to ensure a certain bit rate, are controlled by the network. The UE is not able to proactively reduce the resources allocated by the network. The more resources the UE is allocated, the more energy the UE consumes making use of those resources.
- One relevant aspect that determines to a great extent the energy consumed by a UE is the distance to the base station that the UE is attached to. The greater the distance to the base station, the more energy the UE needs to use to transmit radio signals.

### Summary

The invention is defined in the appended claims. Currently, UE attachment and handover (HO) procedures consider the power level of the signal from the base station as received at the UE, but this does not indicate the distance of the base station from the UE. For example a macro base station far away from the UE can be the one whose signals are reaching the UE with the highest signal power, but there may be a much closer micro/femto base station whose signals reach the UE with lower signal power. The UE would need to use much less energy to transmit to the closer micro/femto base station, so in order to increase the UE battery life the UE should connect to the closest base station.

Therefore, current UE attachment and handover procedures do not aim to minimise the UE's battery consumption. To the contrary, only considering the signal power received at the UE may lead the UE to connect to distant macro-base stations, thus increasing the UE battery consumption.

More generally, the techniques described herein provide for the network to take action to adjust one or more aspects of the connection of a wireless device to a communication network in order to reduce battery consumption of a wireless device.

### Brief Description of the Drawings

Some of the embodiments contemplated herein will now be described more fully with reference to the accompanying drawings, in which:
Fig. 1 is a diagram illustrating a 5^{th} Generation (5G) system reference architecture;
Fig. 2 is a schematic block diagram of an apparatus in a wireless/telecommunication network;
Fig. 3 is a schematic block diagram illustrating a virtualization environment in which functions implemented by some embodiments may be virtualized;
Fig. 4 is a block diagram of a network node according to various embodiments;
Fig. 5 is a block diagram of an analysis node according to various embodiments;
Fig. 6 is a block diagram of a wireless device;
Fig. 7 is a signalling diagram illustrating embodiments of the techniques described herein;
Fig. 8 is a flow chart illustrating a method of operating a network node according to various embodiments;
Fig. 9 is a flow chart illustrating a method of operating an analysis node according to various embodiments; and
Fig. 10 is a flow chart illustrating a method of operating a wireless device.

### Detailed Description

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art. In some instances, detailed descriptions of well-known methods, nodes, interfaces, circuits, and devices are omitted so as not obscure the description with unnecessary detail. Those skilled in the art will appreciate that the functions described may be implemented in one or more nodes using hardware circuitry (e.g., analog and/or discrete logic gates interconnected to perform a specialized function, application-specific integrated circuits (ASICs), programmable logic arrays (PLAs), etc.) and/or using software programs and data in conjunction with one or more digital microprocessors or general purpose computers. Nodes that communicate using the air interface also have suitable radio communications circuitry. Moreover, where appropriate the technology can additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analog) circuitry including but not limited to ASICs and/or field programmable gate array(s) (FPGA(s)), and (where appropriate) state machines capable of performing such functions.

In terms of computer implementation, a computer is generally understood to comprise one or more processors, one or more processing units, one or more processing modules or one or more controllers, and the terms computer, processor, processing unit, processing module and controller may be employed interchangeably. When provided by a computer, processor, processing unit, processing module or controller, the functions may be provided by a single dedicated computer, processor, processing unit, processing module or controller, by a single shared computer, processor, processing unit, processing module or controller, or by a plurality of individual computers, processors, processing units, processing modules or controllers, some of which may be shared or distributed. Moreover, these terms also refer to other hardware capable of performing such functions and/or executing software, such as the example hardware recited above.

Although in the description below the term user equipment (UE) is used, it should be understood by the skilled in the art that "UE" is a non-limiting term comprising any mobile or wireless device or node equipped with a radio interface allowing for at least one of: transmitting signals in uplink (UL) and receiving and/or measuring signals in downlink (DL). A UE herein may comprise a UE (in its general sense) capable of operating or at least performing measurements in one or more frequencies, carrier frequencies, component carriers or frequency bands. It may be a "UE" operating in single- or multi-radio access technology (RAT) or multi-standard mode. As well as "UE" and "wireless device", the term "mobile device" may be used, and it will be appreciated that such a device does not necessarily have to be 'mobile' in the sense that it is carried by a user. Instead, the terms "mobile device", "wireless device" and "UE" encompass any device that is capable of communicating with communication networks that operate according to one or more mobile communication standards, such as the Global System for Mobile communications, GSM, Universal Mobile Telecommunications System (UMTS), Wideband Code-Division Multiple Access (WCDMA), Long-Term Evolution (LTE), New Radio (NR), etc.

A cell is associated with a base station, where a base station comprises in a general sense any network node transmitting radio signals in the downlink and/or receiving radio signals in the uplink. Some example base stations, or terms used for describing base stations, are eNodeB, eNB, NodeB, gNB, Wireless Local Area Network (WLAN) Access Point (AP), macro/micro/pico/femto radio base station, home eNodeB (also known as femto base station), relay, repeater, sensor, transmitting-only radio nodes or receiving-only radio nodes. A base station may operate or at least perform measurements in one or more frequencies, carrier frequencies or frequency bands and may be capable of carrier aggregation. It may also be a single-radio access technology (RAT), multi-RAT, or multi-standard node, e.g., using the same or different base band modules for different RATs.

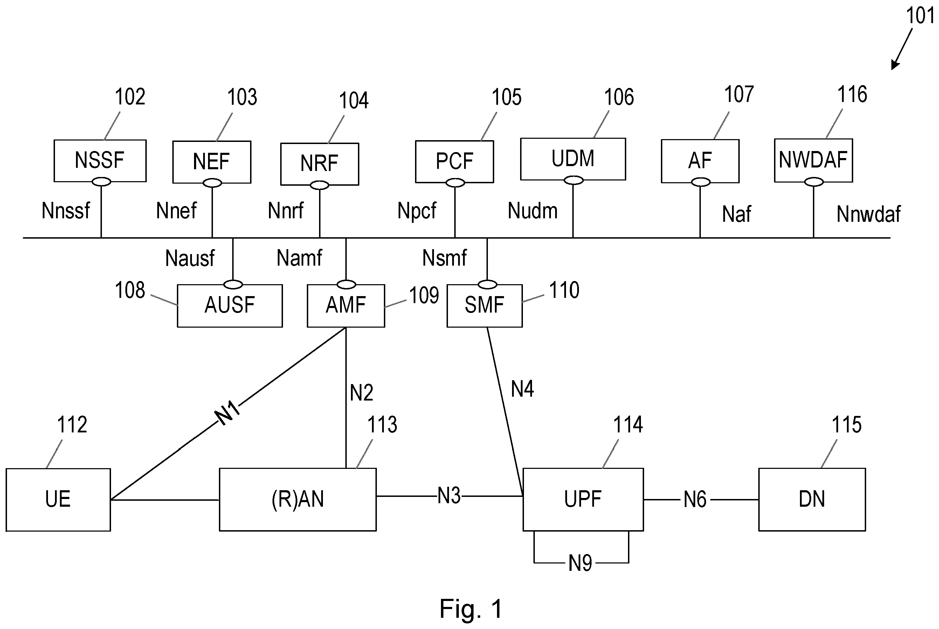

In the 5^{th} Generation (5G) Core (5GC) network, to facilitate cloud native implementations and deployments, a Service-Based Architecture (SBA) is used, and is based on the concept of Network Functions (NF) offering and consuming NF Services over Service Based Interfaces (SBls)/Application Programming Interfaces (APIs). Fig. 1 depicts the 5G reference architecture as defined by 3GPP.

Fig. 1 illustrates a 5G system reference architecture 101 showing service-based interfaces used within the Control Plane (CP). It will be appreciated that not all NFs are depicted. Service-based interfaces are represented in the format Nxyz and point to point interfaces in the format Nx. The reference architecture 101 comprises a Network Slice Selection Function (NSSF) 102 that has a Nnssf interface, a Network Exposure Function (NEF) 103 that has a Nnef interface, a Network Repository Function 104 that has a Nnrf interface, a Policy Control Function (PCF) 105 that has a Npcf interface, a Unified Data Management (UDM) 106 that has a Nudm interface, an Application Function (AF) 107 that has a Naf interface, an Authentication Server Function (AUF) 108 that has a Nausf interface, an Access and Mobility Management Function (AMF) 109 that has a Namf interface, a SMF 110 that has a Nsmf interface, and a Network Data Analytics Function (NWDAF) 116 that has a Nnwdaf interface. The AMF 109 has an N1 interface to a UE 112, and an N2 interface to an access network (AN) 113 (which can be a radio AN, RAN). The SMF 110 has an N4 interface to a User Plane Function (UPF) 114. The interface between the R(AN) 113 and the UPF 114 is the N3 interface, and the interface between the UPF 114 and an Data Network 115 is the N6 interface.

The NEF 103 supports different functionality and acts as the entry point into the operator's network, so an external AF interacts with the 3GPP Core Network through the NEF 103. The NEF 103 supports external applications to manage a specific quality of service (QoS) of a session. The NEF 103 can be used by authorised applications to request information for a session.

The AF 107 interacts with the 3GPP Core Network, and is a representation of an application that is inside or outside the operator's network that interacts with the 3GPP network.

The AMF 109 and the SMF 110 set up the connectivity to the UE 112 through the data network 115, and provide communications between the UE 112 and the other NFs. The AMF 109 is responsible for, among other things, the mobility management of the UEs 112.

The PCF 105 is responsible for providing policy rules to control plane functions that enforce the policy rules, and generally the PCF 105 supports policy and charging control functions. The policy rules can relate to network slicing, roaming and mobility management. The PCF 105 accesses subscription information for policy decisions made by a User Data Repository (UDR).

The NWDAF 116 represents an operator managed network analytics logical function. The NWDAF 116 is responsible for providing network analysis information upon request from network functions. For example, a network function may request specific analysis information on the load level of a particular network slice. Alternatively, the network function can use the subscribe service to ensure that it is notified by the NWDAF 116 if the load level of a network slice changes or reaches a specific threshold. As noted below, the NWDAF 116 can be used according to the techniques described herein to notify other nodes in the network that battery consumption of a UE should be reduced.

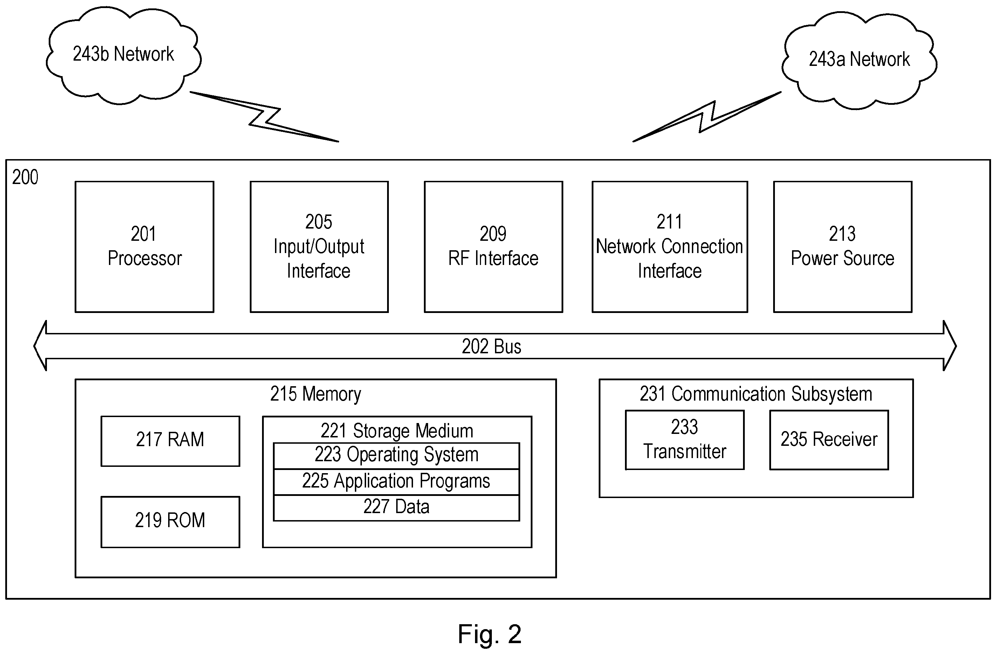

Fig. 2 illustrates one embodiment of a wireless device/UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 200 may be any UE identified by the 3rd Generation Partnership Project (3GPP), including a NB-loT UE, a machine type communication (MTC) UE, and/or an enhanced MTC (eMTC) UE. UE 200, as illustrated in Fig. 2, is one example of a WD configured for communication in accordance with one or more communication standards promulgated by the 3rd Generation Partnership Project (3GPP), such as 3GPP's GSM, UMTS, LTE, and/or 5G standards. As mentioned previously, the term WD and UE may be used interchangeable. Accordingly, although Fig. 2 is a UE, the components discussed herein are equally applicable to a WD, and vice-versa.

In Fig. 2, UE 200 includes processing circuitry 201 that is operatively coupled to input/output interface 205, radio frequency (RF) interface 209, network connection interface 211, memory 215 including random access memory (RAM) 217, read-only memory (ROM) 219, and storage medium 221 or the like, communication subsystem 231, power source 233, and/or any other component, or any combination thereof. Storage medium 221 includes operating system 223, application program 225, and data 227. In other embodiments, storage medium 221 may include other similar types of information. Certain UEs may utilize all of the components shown in Figure 2, or only a subset of the components. The level of integration between the components may vary from one UE to another UE. Further, certain UEs may contain multiple instances of a component, such as multiple processors, memories, transceivers, transmitters, receivers, etc.

In Fig. 2, processing circuitry 201 may be configured to process computer instructions and data. Processing circuitry 201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 201 may include two central processing units (CPUs). Data may be information in a form suitable for use by a computer.

In the depicted embodiment, input/output interface 205 may be configured to provide a communication interface to an input device, output device, or input and output device. UE 200 may be configured to use an output device via input/output interface 205. An output device may use the same type of interface port as an input device. For example, a USB port may be used to provide input to and output from UE 200. The output device may be a speaker, a sound card, a video card, a display, a monitor, a printer, an actuator, an emitter, a smartcard, another output device, or any combination thereof. UE 200 may be configured to use an input device via input/output interface 205 to allow a user to capture information into UE 200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Fig. 2, RF interface 209 may be configured to provide a communication interface to RF components such as a transmitter, a receiver, and an antenna. Network connection interface 211 may be configured to provide a communication interface to network 243a. Network 243a may encompass wired and/or wireless networks such as a local-area network (LAN), a wide-area network (WAN), a computer network, a wireless network, a telecommunications network, another like network or any combination thereof. For example, network 243a may comprise a Wi-Fi network. Network connection interface 211 may be configured to include a receiver and a transmitter interface used to communicate with one or more other devices over a communication network according to one or more communication protocols, such as Ethernet, TCP/IP, SONET, ATM, or the like. Network connection interface 211 may implement receiver and transmitter functionality appropriate to the communication network links (e.g., optical, electrical, and the like). The transmitter and receiver functions may share circuit components, software or firmware, or alternatively may be implemented separately.

RAM 217 may be configured to interface via bus 202 to processing circuitry 201 to provide storage or caching of data or computer instructions during the execution of software programs such as the operating system, application programs, and device drivers. ROM 219 may be configured to provide computer instructions or data to processing circuitry 201. For example, ROM 219 may be configured to store invariant low-level system code or data for basic system functions such as basic input and output (I/O), startup, or reception of keystrokes from a keyboard that are stored in a non-volatile memory. Storage medium 221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 221 may be configured to include operating system 223, application program 225 such as a web browser application, a widget or gadget engine or another application, and data file 227. Storage medium 221 may store, for use by UE 200, any of a variety of various operating systems or combinations of operating systems.

Storage medium 221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 221 may allow UE 200 to access computer-executable instructions, application programs or the like, stored on transitory or non-transitory memory media, to off-load data, or to upload data. An article of manufacture, such as one utilizing a communication system may be tangibly embodied in storage medium 221, which may comprise a device readable medium.

In Fig. 2, processing circuitry 201 may be configured to communicate with network 243b using communication subsystem 231. Network 243a and network 243b may be the same network or networks or different network or networks. Communication subsystem 231 may be configured to include one or more transceivers used to communicate with network 243b. For example, communication subsystem 231 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 233 and/or receiver 235 to implement transmitter or receiver functionality, respectively, appropriate to the RAN links (e.g., frequency allocations and the like). Further, transmitter 233 and receiver 235 of each transceiver may share circuit components, software or firmware, or alternatively may be implemented separately.

In the illustrated embodiment, the communication functions of communication subsystem 231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 231 may include cellular communication, Wi-Fi communication, Bluetooth communication, and GPS communication. Network 243b may encompass wired and/or wireless networks such as a local-area network (LAN), a wide-area network (WAN), a computer network, a wireless network, a telecommunications network, another like network or any combination thereof. For example, network 243b may be a cellular network, a Wi-Fi network, and/or a near-field network. Power source 213 may be configured to provide alternating current (AC) or direct current (DC) power to components of UE 200.

The features, benefits and/or functions described herein may be implemented in one of the components of UE 200 or partitioned across multiple components of UE 200. Further, the features, benefits, and/or functions described herein may be implemented in any combination of hardware, software or firmware. In one example, communication subsystem 231 may be configured to include any of the components described herein. Further, processing circuitry 201 may be configured to communicate with any of such components over bus 202. In another example, any of such components may be represented by program instructions stored in memory that when executed by processing circuitry 201 perform the corresponding functions described herein. In another example, the functionality of any of such components may be partitioned between processing circuitry 201 and communication subsystem 231. In another example, the non-computationally intensive functions of any of such components may be implemented in software or firmware and the computationally intensive functions may be implemented in hardware.

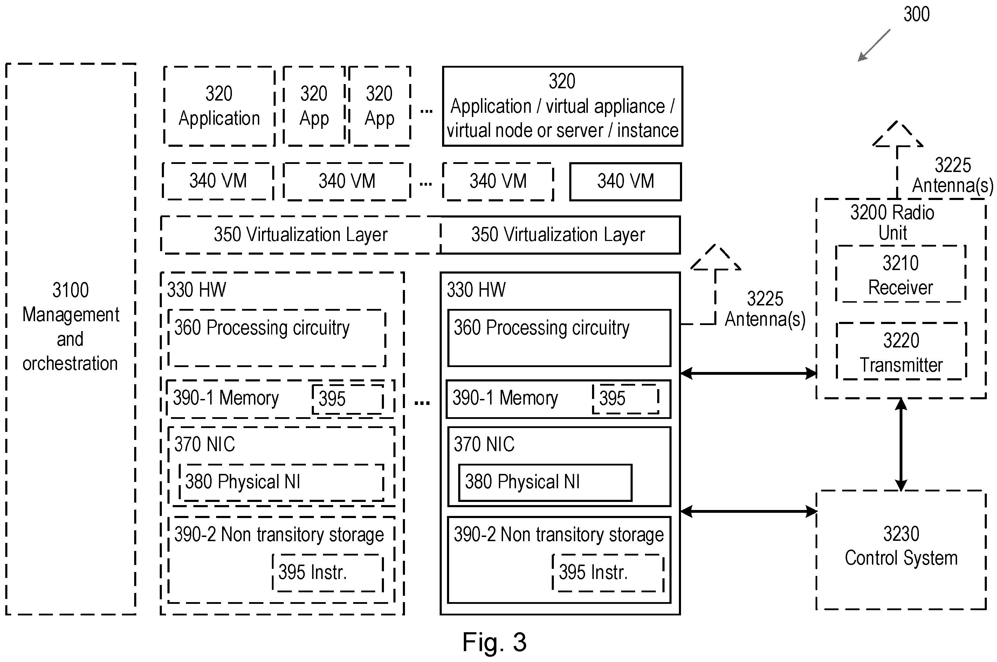

Fig. 3 is a schematic block diagram illustrating a virtualization environment 300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node), a network node such as an AMF or PCF, an analysis node such as an NWDAF, or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 300 hosted by one or more of hardware nodes 330. Further, in embodiments in which the virtual node is not a radio access node or does not require radio connectivity (e.g., a core network node, such as an AMF, PCF or NWDAF), then the network node may be entirely virtualized.

The functions may be implemented by one or more applications 320 (which may alternatively be called software instances, virtual appliances, network functions, virtual nodes, virtual network functions, etc.) operative to implement some of the features, functions, and/or benefits of some of the embodiments disclosed herein. Applications 320 are run in virtualization environment 300 which provides hardware 330 comprising processing circuitry 360 and memory 390. Memory 390 contains instructions 395 executable by processing circuitry 360 whereby application 320 is operative to provide one or more of the features, benefits, and/or functions disclosed herein.

Virtualization environment 300, comprises general-purpose or special-purpose network hardware devices 330 comprising a set of one or more processors or processing circuitry 360, which may be commercial off-the-shelf (COTS) processors, dedicated Application Specific Integrated Circuits (ASICs), or any other type of processing circuitry including digital or analog hardware components or special purpose processors. Each hardware device may comprise memory 390-1 which may be non-persistent memory for temporarily storing instructions 395 or software executed by processing circuitry 360. Each hardware device may comprise one or more network interface controllers (NICs) 370, also known as network interface cards, which include physical network interface 380. Each hardware device may also include non-transitory, persistent, machine-readable storage media 390-2 having stored therein software 395 and/or instructions executable by processing circuitry 360. Software 395 may include any type of software including software for instantiating one or more virtualization layers 350 (also referred to as hypervisors), software to execute virtual machines 340 as well as software allowing it to execute functions, features and/or benefits described in relation with some embodiments described herein.

Virtual machines 340, comprise virtual processing, virtual memory, virtual networking or interface and virtual storage, and may be run by a corresponding virtualization layer 350 or hypervisor. Different embodiments of the instance of virtual appliance 320 may be implemented on one or more of virtual machines 340, and the implementations may be made in different ways.

During operation, processing circuitry 360 executes software 395 to instantiate the hypervisor or virtualization layer 350, which may sometimes be referred to as a virtual machine monitor (VMM). Virtualization layer 350 may present a virtual operating platform that appears like networking hardware to virtual machine 340.

As shown in Fig. 3, hardware 330 may be a standalone network node with generic or specific components. Hardware 330 may comprise antenna 3225 and may implement some functions via virtualization. Alternatively, hardware 330 may be part of a larger cluster of hardware (e.g. such as in a data center or customer premise equipment (CPE)) where many hardware nodes work together and are managed via management and orchestration (MANO) 3100, which, among others, oversees lifecycle management of applications 320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 340 may be a software implementation of a physical machine that runs programs as if they were executing on a physical, non-virtualized machine. Each of virtual machines 340, and that part of hardware 330 that executes that virtual machine, be it hardware dedicated to that virtual machine and/or hardware shared by that virtual machine with others of the virtual machines 340, forms a separate virtual network elements (VNE).

Still in the context of NFV, Virtual Network Function (VNF) is responsible for handling specific network functions that run in one or more virtual machines 340 on top of hardware networking infrastructure 330 and corresponds to application 320 in Fig. 3.

In some embodiments, one or more radio units 3200 that each include one or more transmitters 3220 and one or more receivers 3210 may be coupled to one or more antennas 3225. Radio units 3200 may communicate directly with hardware nodes 330 via one or more appropriate network interfaces and may be used in combination with the virtual components to provide a virtual node with radio capabilities, such as a radio access node or a base station.

In some embodiments, some signalling can be effected with the use of control system 3230 which may alternatively be used for communication between the hardware nodes 330 and radio units 3200.

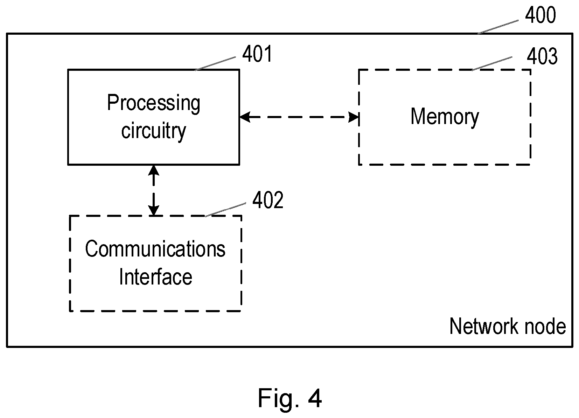

Fig. 4 is a simplified block diagram of a network node 400 according to various embodiments that can be used to implement the techniques described herein. It will be appreciated that the network node 400 may comprise one or more virtual machines running different software and/or processes. The network node 400 may therefore comprise one or more servers, switches and/or storage devices and/or may comprise cloud computing infrastructure that runs the software and/or processes. In a 5G network the network node 400 described herein may be a policy management node, such as a PCF, or a mobility management node, such as an AMF. As noted further below, in embodiments of the described techniques, both an improved policy management node (PCF) and an improved mobility management node (AMF) may be used.

The processing circuitry 401 controls the operation of the network node 400 and can implement the methods described herein in relation to the network node 400. The processing circuitry 401 can comprise one or more processors, processing units, multicore processors or modules that are configured or programmed to control the network node 400 in the manner described herein. In particular implementations, the processing circuitry 401 can comprise a plurality of software and/or hardware modules that are each configured to perform, or are for performing, individual or multiple steps of the method described herein in relation to the network node 400.

In some embodiments, the network node 400 may optionally comprise a communications interface 402. The communications interface 402 can be for use in communicating with other nodes, such as other virtual nodes. For example, the communications interface 402 can be configured to transmit to and/or receive from other nodes or network functions requests, resources, information, data, signals, or similar. The processing circuitry 401 may be configured to control the communications interface 402 of the network node 400 to transmit to and/or receive from other nodes or network functions requests, resources, information, data, signals, or similar. In embodiments where the network node 400 is a mobility management node (e.g. AMF), the communications interface 402 may be configured to enable the AMF to transmit to and/or receive from other nodes, such as a policy management node (e.g. a PCF), an analysis node (e.g. an NWDAF 780) and a UE. In embodiments where the network node 400 is a policy management node (PCF), the communications interface 402 may be configured to enable the policy management node (PCF) to transmit to and/or receive from other nodes, such as a mobility management node (AMF), and an analysis node (NWDAF).

Optionally, the network node 400 may comprise a memory 403. In some embodiments, the memory 403 can be configured to store program code that can be executed by the processing circuitry 401 to perform the method described herein in relation to the network node 400. Alternatively or in addition, the memory 403 can be configured to store any requests, resources, information, data, signals, or similar that are described herein. The processing circuitry 401 may be configured to control the memory 403 to store any requests, resources, information, data, signals, or similar that are described herein.

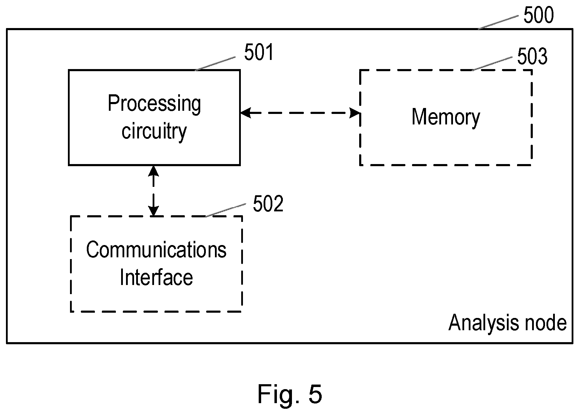

Fig. 5 is a simplified block diagram of an analysis node 500 according to various embodiments that can be used to implement the techniques described herein. It will be appreciated that the analysis node 500 may comprise one or more virtual machines running different software and/or processes. The analysis node 500 may therefore comprise one or more servers, switches and/or storage devices and/or may comprise cloud computing infrastructure that runs the software and/or processes. In a 5G network the analysis node 500 described herein may be an NWDAF.

The processing circuitry 501 controls the operation of the analysis node 500 and can implement the methods described herein in relation to the analysis node 500. The processing circuitry 501 can comprise one or more processors, processing units, multicore processors or modules that are configured or programmed to control the analysis node 500 in the manner described herein. In particular implementations, the processing circuitry 501 can comprise a plurality of software and/or hardware modules that are each configured to perform, or are for performing, individual or multiple steps of the method described herein in relation to the analysis node 500.

In some embodiments, the analysis node 500 may optionally comprise a communications interface 502. The communications interface 502 can be for use in communicating with other nodes, such as other virtual nodes. For example, the communications interface 502 can be configured to transmit to and/or receive from other nodes or network functions requests, resources, information, data, signals, or similar. The processing circuitry 501 may be configured to control the communications interface 502 of the analysis node 500 to transmit to and/or receive from other nodes or network functions requests, resources, information, data, signals, or similar. In embodiments where the analysis node 500 is an NWDAF, the communications interface 502 may be configured to enable the NWDAF to transmit to and/or receive from other nodes, such as an AMF and a PCF.

Optionally, the analysis node 500 may comprise a memory 503. In some embodiments, the memory 503 can be configured to store program code that can be executed by the processing circuitry 501 to perform the method described herein in relation to the analysis node 500. Alternatively or in addition, the memory 503 can be configured to store any requests, resources, information, data, signals, or similar that are described herein. The processing circuitry 501 may be configured to control the memory 503 to store any requests, resources, information, data, signals, or similar that are described herein.

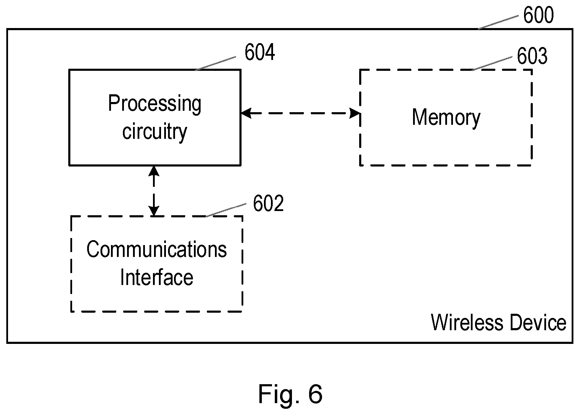

Fig. 6 is a simplified block diagram of a wireless device 600 according to various embodiments that can be used to implement the techniques described herein. It will be appreciated that the wireless device 600 may comprise one or more virtual machines running different software and/or processes. The wireless device 600 may therefore comprise one or more servers, switches and/or storage devices and/or may comprise cloud computing infrastructure that runs the software and/or processes.

The processing circuitry 601 controls the operation of the wireless device 600 and can implement the methods described herein in relation to the wireless device 600. The processing circuitry 601 can comprise one or more processors, processing units, multicore processors or modules that are configured or programmed to control the wireless device 600 in the manner described herein. In particular implementations, the processing circuitry 601 can comprise a plurality of software and/or hardware modules that are each configured to perform, or are for performing, individual or multiple steps of the method described herein in relation to the wireless device 600.

In some embodiments, the wireless device 600 may optionally comprise a communications interface 602. The communications interface 602 can be for use in communicating with other nodes, such as other virtual nodes. For example, the communications interface 602 can be configured to transmit to and/or receive from other nodes or network functions requests, resources, information, data, signals, or similar. The processing circuitry 601 may be configured to control the communications interface 602 of the wireless device 600 to transmit to and/or receive from other nodes or network functions requests, resources, information, data, signals, or similar. The communications interface 502 may be configured to enable the wireless device 600 to transmit to and/or receive from other nodes, such as an AMF.

Optionally, the wireless device 600 may comprise a memory 603. In some embodiments, the memory 603 can be configured to store program code that can be executed by the processing circuitry 601 to perform the method described herein in relation to the wireless device 600. Alternatively or in addition, the memory 603 can be configured to store any requests, resources, information, data, signals, or similar that are described herein. The processing circuitry 601 may be configured to control the memory 603 to store any requests, resources, information, data, signals, or similar that are described herein.

As set out above, processes to save power in a UE currently take place solely on the UE side. This is not optimal and can lead to opportunities to improve UE battery saving on the network side being missed or overlooked. For example the network controls the network resources allocated to the UE, for example to ensure a certain bit rate, and the more resources the UE is allocated, the more energy the UE consumes making use of those resources. As another example, the distance from the UE to the base station that the UE is attached to influences the power consumption. The greater the distance to the base station, the more energy the UE needs to use to transmit radio signals.

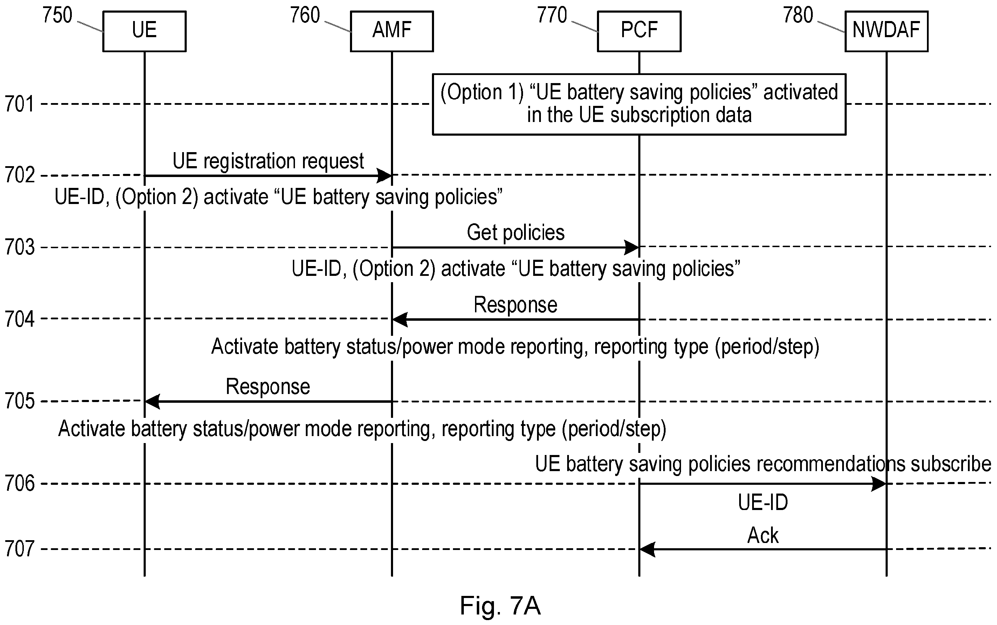

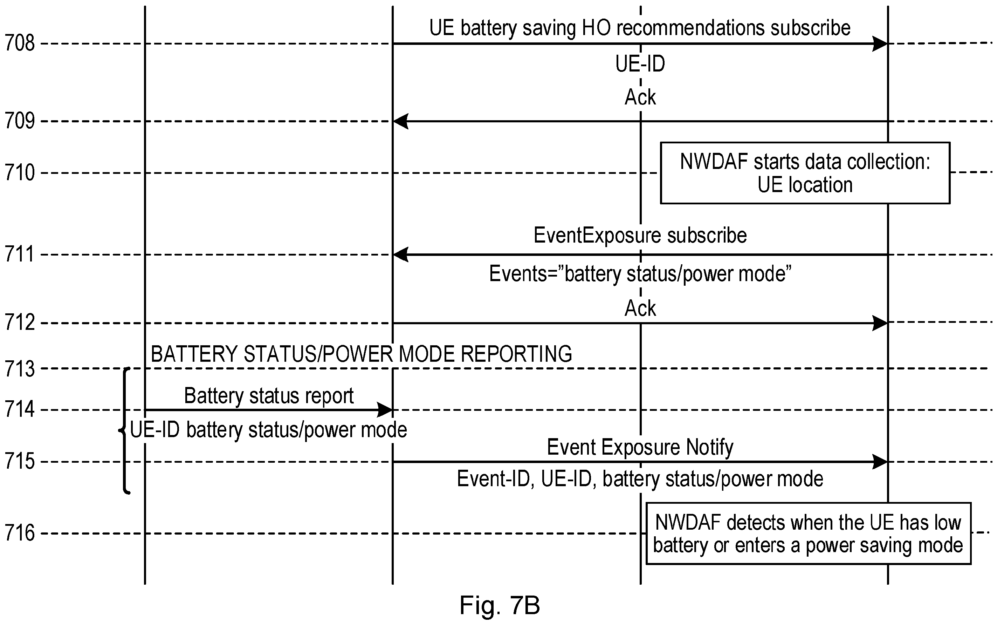

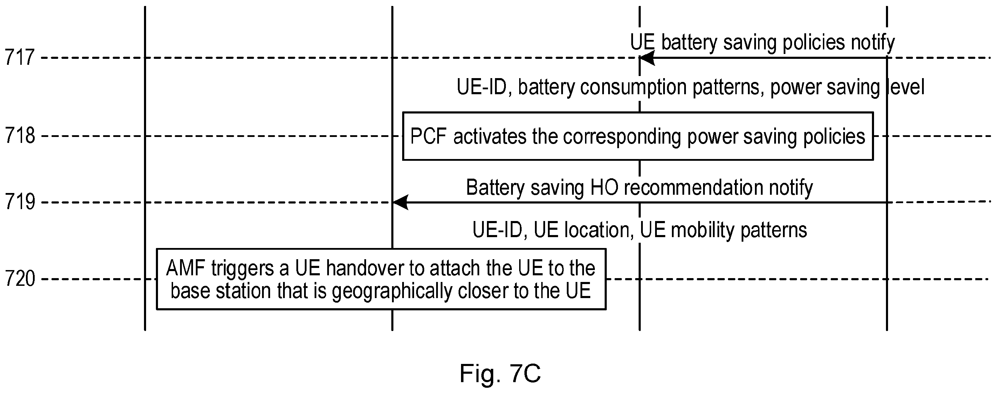

The techniques described herein provide for the network to take action to adjust one or more aspects of the connection of a wireless device to a communication network in order to reduce battery consumption of a wireless device. Embodiments of the techniques described herein are illustrated with reference to the signalling diagram in Fig. 7. Fig. 7 shows signalling between a UE (wireless device) 750, a mobility management node in the form of an AMF 760, a policy management node in the form of a PCF 770 and an analysis node in the form of an NWDAF 780.

In particular embodiments, analytics by the network (e.g. by the NWDAF 780) can be used to overcome the above problems.

Initially, at optional step 701, a UE 750 that is to be subject to battery saving policies according to the disclosed techniques can have a feature "UE battery saving policies" activated in its subscription data that is stored in a UDR.

The UE 750 sends a registration request (signal 702) to the AMF 760 so that the UE 750 can attach to the communication network. Although not shown in Fig. 7, the registration request 702 is sent by the UE 750 to a base station in the communication network, and the base station passes the registration request to the AMF 760. The registration request 702 includes an identifier for the UE 750 (e.g. UE-ID, such as an International Mobile Subscriber Identity (IMSI)).

As an alternative (or in addition) to the UE 750 having a feature "UE battery saving policies" activated in its subscription data that is stored in a UDR in step 701, the UE 750 can include an indication in the registration request 702 that the UE 750 wants to activate battery saving policies for the UE 750.

At attachment of the UE 750 to the communication network, the AMF 760 sends a policy request 703 to the PCF 770 to retrieve the relevant policies for the UE 750. The policy request 703 includes the identifier for the UE 750, and the indication that the UE 750 wants to activate battery saving policies (where this indication is also included in the registration request 702).

The PCF 770 responds to the policy request 703 with a policy request response 704 that includes an indication from the PCF 770 that a policy should be applied in which battery level and/or power mode reporting in the UE 750 is activated. The PCF 770 can determine that battery level and/or power mode reporting should be activated based on UE 750 having a feature "UE battery saving policies" activated in its subscription data (according to step 701), or the policy request 703 including the indication that the UE 750 wants to activate battery saving policies. The policy request response 704 can include an indication of the type of battery level and/or power mode reporting required by the UE 750. For example the indication can indicate how often the battery level and/or power mode should be reported (i.e. the reporting period, e.g. report every hour, every 10 minutes, etc.) and/or the granularity of the reporting (i.e. the reporting step, e.g. report when the battery level has decreased or increased by X% from the last reported battery level and/or report when the battery level has reached Y%). The power mode of the UE 750 can relate to whether an operating system level power mode has been activated in the UE 750.

After receiving the policy request response 704 the AMF 760 sends a registration request response 705 to the UE 750 (via non-access stratum (NAS) messaging via the base station). The registration request response 705 indicates that the UE 750 should activate battery level and/or power mode reporting. The policy request response 704 can also include the indication of the type of battery level and/or power mode reporting required by the UE 750, i.e. the policy request response 704 can indicate how often the battery level and/or power mode should be reports and/or the reporting granularity. For example, the registration request response 705 can indicate that the UE 750 should activate the reporting of the battery level when the battery level is 40% or the power mode of the UE 750 is changed to a power saving mode.

Subsequently, the UE 750 starts to report battery level and/or the UE 750's power mode to the AMF 760 (via NAS) as indicated by the registration request response 705. The monitoring and reporting of battery level and/or power mode is discussed further below with reference to step 713.

To enable the battery consumption improvements according to the disclosed techniques, the NWDAF 780 can expose two services to other network functions for battery saving purposes. A first service can recommend optimal battery saving policies that can be used by the PCF 770. A second service can recommend optimal handover decisions for battery saving that can be used by the AMF 760. In some implementations, the NWDAF 780 may only provide one of these two services, but in other implementations, the NWDAF 780 can provide both services.

In embodiments where the NWDAF 780 provides the first service to recommend optimal battery saving policies, the PCF 770 can send a subscription request 706 to the NWDAF 780 to subscribe to notifications from the NWDAF 780 on recommendations for optimal battery saving policies for the UE 750. The subscription request 706 can relate specifically to the UE 750, and thus the subscription request 706 can include the identifier for the UE 750. The NWDAF 780 responds to the PCF 770 with a subscription request acknowledgement 707 indicating that the subscription is active.

In embodiments where the NWDAF 780 provides the second service to recommend optimal handover decisions for battery saving, the AMF 760 can send a subscription request 708 to the NWDAF 780 to subscribe to notifications from the NWDAF 780 on recommendations for optimal handover decisions for the UE 750. The subscription request 708 can relate specifically to the UE 750, and thus the subscription request 708 can include the identifier for the UE 750. The NWDAF 780 responds to the AMF 760 with a subscription request acknowledgement 709 indicating that the subscription is active.

To generate the recommendations according to either service, the NWDAF 780 starts to collect or obtain information about the UE 750. This is shown as step 710. The information can be obtained from the AMF 760 using the AMF's event exposure service ('EventExposure') and therefore the NWDAF 780 can send a subscription request 711 to the AMF 760 requesting a subscription to events at the AMF 760 relating to battery status and/or power mode of the UE 750. The AMF 760 responds with a subscription request acknowledgement 712 indicating that the subscription is active.

In embodiments the information about the UE 750 can be or include location information for the UE 750, which can be obtained by the NWDAF 780 via the AMF 760 in real-time. Preferably this location information is obtained with a finer granularity than on a per cell or per cell-ID basis. For example the location information can be locations obtained by a satellite positioning system receiver in the UE 750, such as a Global Navigation Satellite System (GNSS), (e.g. Global Positioning System (GPS), Galileo, etc.). Network-assisted GNSS methods, e.g. as specified in 3GPP TS 36.305 or 3GPP TS 23.271 can also be used. As another example, the location information can be locations obtained by short-range communications in the UE 750, such as via WiFi access point (AP) identities (IDs), where the location of the WiFi AP is known, Bluetooth device names that the UE 750 connects to, etc.

As noted, from step 713 the UE 750 can start to report battery level and/or the UE 750's power mode to the AMF 760 (via NAS). This information can be sent to the AMF 760 in a battery status report 714. The battery status report 714 can include an identifier for the UE 750 and information relating to the battery level and/or the power mode of the UE 750. For example the battery status report 714 can indicate that the battery level of the UE 750 is now 40% (e.g. "battery-level=40%"). As another example, the battery status report 714 can indicate that the power mode of the UE 750 is a power saving mode (e.g. "power-mode=power-saving").

In view of the NWDAF 780's subscription to the AMF 760, the AMF 760 sends an event exposure notification 715 to the NWDAF 780 that includes the information received in the battery status report 714 from the UE 750. Thus the event exposure notification 715 can include an identifier for the UE 750, an identifier for the event (e.g. Event-ID='battery status/power mode') and the information relating to the battery level and/or the power mode of the UE 750 (e.g. 'battery-level=40%' and/or 'power-mode=power-saving').

In an optional embodiment, steps/signals 711, 712 and 715 can be replaced or supplemented with an alternative approach in which an application running on the UE 750 is responsible for sending the information in the battery status report 714 to the NWDAF 780. Thus the UE application can send the battery status report information to the NWDAF 780 via an application function (e.g. AF 107 in Fig. 1) and a NEF (e.g. NEF 103 in Fig 1).

After receiving the information relating to the battery level and/or the power mode of the UE 750, the NWDAF 780 can analyse the information to determine whether the network should take steps to reduce the power consumption of the UE 750 (step 716). In some embodiments the NWDAF 780 may determine whether the network should take steps to reduce the power consumption of the UE 750 based on the reported battery level and/or whether the UE 750 is in a power saving mode. For example the NWDAF 780 may determine that the network should take steps to reduce the power consumption of the UE 750 if the reported remaining battery level is below a threshold (or likewise a reported used battery level is above a threshold) and/or if the NWDAF 780 detects that the UE 750 has entered, or is in, a power saving mode instead of a normal power consumption mode.

In embodiments where the NWDAF 780 provides the first service to recommend optimal battery saving policies to the PCF 770, and the NWDAF 780 determines that the network should take steps to reduce the power consumption of the UE 750, the NWDAF 780 sends a notification to the PCF 770 (battery saving policy notification 717) to recommend a reduction in the battery consumption of the UE 750. The battery saving policy notification 717 can indicate any of: an identifier for the UE 750, information indicating the battery level of the UE 750 (and/or information indicating the battery level of the UE 750 with respect to a threshold), information indicating a power saving mode of the UE 750, information indicating a desired power saving level/policy for the UE 750 (e.g. low power saving, medium power saving, high power saving, etc.), and/or information indicating a pattern of the battery level and/or power mode for the UE 750 over time.

In response to the battery saving policy notification 717, the PCF 770 can activate a corresponding power saving policy(ies) for the UE 750 (step 718). For example in response to a battery saving policy notification 717 that recommends reducing the battery consumption of the UE 750, the PCF 770 can activate a power saving policy to lower the maximum bit rate (MBR) that the UE 750 can transmit data with, or lower an actual bit rate that the UE 750 is transmitting data with. This lowering of the MBR can be achieved via dynamic policy and charging control (PCC) rules following standard mechanisms. In some embodiments, the PCF 770 may use the information in the battery saving policy notification 717 (e.g. information indicating a battery consumption pattern) to decide an optimal policy for the UE 750. For example the PCF 770 can decide to apply battery saving policies in periods of time when the UE 750 is expected to have a high battery consumption, while maintaining more relaxed battery saving policies (i.e. policies that do not seek to reduce battery consumption as much) when the UE 750 is expected to be inactive. In some cases the PCF 770 can decide to postpone the use of battery consuming policies and only trigger/implement them when the UE 750 is expected to be in a charging mode (i.e. connected to an external power supply).

In some embodiments, the battery saving policy notification 717 may provide a recommended power saving enforcement level from amongst a range of possible power saving enforcement levels, and the PCF 770 can determine an appropriate policy to implement for the recommended power saving enforcement level.

In embodiments where the NWDAF 780 provides the second service to recommend optimal handover decisions for battery saving, and the NWDAF 780 determines that the network should take steps to reduce the power consumption of the UE 750, the NWDAF 780 sends a notification to the AMF 760 (battery saving HO recommendation notification 719) to reduce battery consumption of the UE 750. The battery saving HO recommendation notification 719 can indicate any of: an identifier for the UE 750, information indicating the location of the UE 750 (e.g. a current location, for example satellite positioning system coordinates) and/or information indicating a mobility pattern for the UE 750 representing the movements of the UE 750 over time (e.g. a series of previous locations of the UE 750, including the timing of those locations).

In response to the battery saving HO recommendation notification 719, the AMF 760 can determine whether it is possible to handover the UE 750 to a base station that is geographically closer to the UE 750 than the current serving base station for the UE 750 (and therefore the UE 750 will use less power to communicate with that closer base station than the current serving base station). If so, the AMF 760 can trigger a handover of the UE 750 to the geographically closer base station (step 720). The handover can be triggered according to conventional handover techniques. In this step the AMF 760 can compare the location or mobility pattern of the UE 750 to the known locations of the base stations in the communication network, and determine which base station(s) is/are closest to the UE's current location or closest to the likely movement path of the UE 750.

In some embodiments, the AMF 760 may use the information in the battery saving HO recommendation notification 719 (e.g. information a mobility pattern of the UE 750) to decide an optimal handover target for the UE 750. For example the AMF 760 may use the mobility patterns of the UE 750 to decide an optimal handover strategy to minimise the average distance between the UE 750 and the base stations during the movement of the UE 750.

The above techniques can provide a number of advantages. For example the above techniques can enable network operators to offer battery saving services to their customers. As another example, the mobility patterns of the UEs can be considered upon handover procedures to select (more) optimal base stations to minimise the battery consumption of the UE 750. In another example, battery/energy consumption patterns of the UE can be considered when deciding the optimal policies to use to minimise the UE's battery consumption. In a further example, the network operator may know when the UE is charging and trigger battery consuming policies when the UE is expected to be in a charging mode.

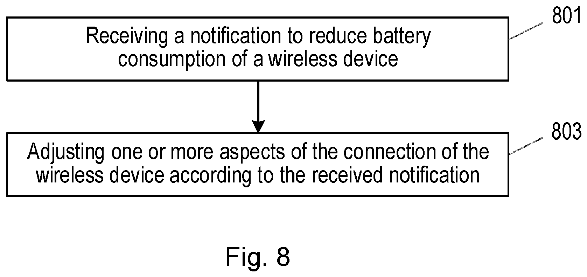

The flow chart in Fig. 8 illustrates a method of operating a network node in a communication network according to various embodiments. The method steps in Fig. 8 are applicable to a mobility management node such as AMF 760 and to a policy management node such as PCF 770. The method can be implemented by network node 400 as shown in Fig. 4.

In a first step, step 801, the network node 400 receives a notification to reduce battery consumption of a wireless device that is connected to the communication network. This notification is received from an analysis node 500 in the communication network. Step 801 corresponds generally to notification 717 or notification 719 in Fig. 7 described above. In some embodiments the received notification is a recommendation for network-initiated battery saving by the network node.

In step 803, the network node 400 adjusts one or more aspects of the connection of the wireless device to the communication network according to the received notification. Step 803 corresponds generally to the actions of the PCF 770 in step 718 or the actions of the AMF 760 in step 720 in Fig. 7 described above.

In some embodiments, the method further comprises the network node 400 receiving an indication to activate network-initiated battery saving for the wireless device. This step corresponds generally to registration request 702 or policy request 703 in Fig. 7 described above.

In some embodiments, the network node 400 sends at least one of an indication to the wireless device to activate battery level reporting and an indication to the wireless device to activate power mode reporting. This step corresponds generally to response 704 or response 705 in Fig. 7 described above.

The method can further comprise a step in which the network node 400 sends a first subscription request for recommendations for network-initiated battery saving by the network node. This first subscription request is sent to analysis node 500 in the communication network. 5. This step corresponds generally to subscription request 706 or subscription request 708 in Fig. 7 described above.

The following embodiments apply primarily where the network node 400 is a mobility management node such as an AMF 760. In these embodiments, the step of adjusting 803 comprises triggering a handover of the wireless device to a target base station.

The network node 400 (AMF 760) may receive a subscription request for data comprising at least one of battery level of the wireless device and power mode of the wireless device from the analysis node 500. This step corresponds generally to subscription request 711 in Fig. 7 described above.

In some embodiments, the network node 400 (AMF 760) may receive data comprising at least one of battery level of the wireless device and power mode of the wireless device from the wireless device 600. This step corresponds generally to battery status report 714 in Fig. 7 described above.

In some embodiments, the network node 400 (AMF 760) may send data comprising at least one of battery level of the wireless device and power mode of the wireless device to the analysis node 500. This step corresponds generally to event notification 715 in Fig. 7 described above.

In some embodiments, the notification in step 803 is a notification to perform a handover for the wireless device. In these embodiments, the notification may comprise location information for the wireless device, such as one or more locations of the wireless device obtained by a satellite positioning system receiver, or one or more locations of the wireless device obtained by short-range communications. In these embodiments, the network node 400 (AMF 760) can determine a target base station for the handover based on the location information for the wireless device. In particular, the network node 400 (AMF 760) can determine the target base station as a base station that is geographically closer to the wireless device than a current serving base station of the wireless device. This can be done by comparing the received location information to location information for at least one base station. Alternatively or in addition, this can be done by determining a distance between the wireless device and at least one base station for a number (series) of locations of the wireless device. Alternatively or in addition, the target base station can be determined as a base station that has a distance to the wireless device that is smaller than a distance between the wireless device and a current serving base station of the wireless device.

In some embodiments, the method also includes a step in which a request for a policy for the wireless device is sent to a policy management node (e.g. PCF 770). A network-initiated battery saving policy for the wireless device is then received from the policy management node. These steps correspond generally to policy request 703 and response 704 in Fig. 7 described above.

The following embodiments apply primarily where the network node 400 is a policy management node such as a PCF 770. In these embodiments, the notification received in step 801 can comprise a battery consumption pattern for the wireless device and/or a power saving level for the wireless device. Step 803 can comprise applying the determined battery saving policy (corresponding to step 718 in Fig 7). As noted above, applying the determined battery saving policy may result in changes or adjustments to the network resources allocated to transmissions from and/or transmissions to the wireless device.

In some embodiments, the network node 400 (PCF 770) can determine a battery saving policy to apply based on the battery consumption pattern for the wireless device and/or the power saving level for the wireless device. The battery saving policy to apply can be determined based on when the wireless device is expected to have a high battery consumption. It may be determined that the use of a battery saving policy is to be postponed when the wireless device is expected to be inactive and/or in a charging mode.

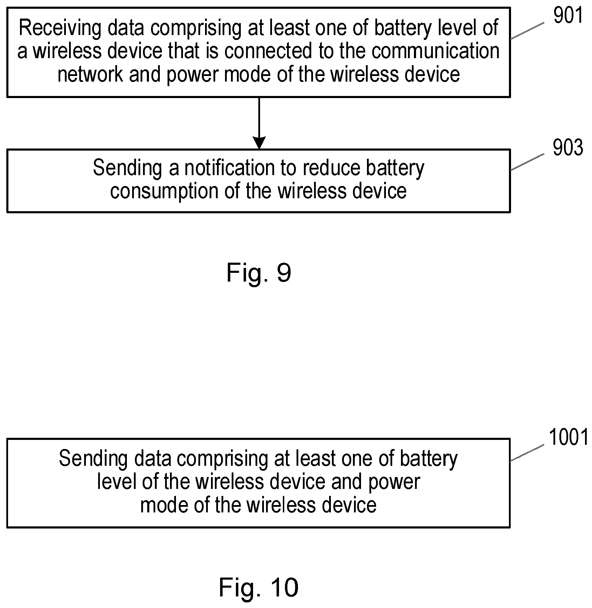

The flow chart in Fig. 9 illustrates a method of operating an analysis node in a communication network according to various embodiments. The method steps in Fig. 9 are applicable to an analysis node 500 such as an NWDAF 780. The method can be implemented by analysis node 500 as shown in Fig. 5.

In a first step, step 901, the analysis node 500 receives data comprising at least one of battery level of a wireless device that is connected to the communication network and power mode of the wireless device. Step 901 corresponds generally to event notification 715 in Fig. 7 described above.

The analysis node 500 then sends a notification to reduce battery consumption of the wireless device to a network node 400 in the communication network. The network node 400 can be a mobility management node such as an AMF 760 or a policy management node such as a PCF 770. Step 903 corresponds generally to notification 717 or 719 in Fig. 7 described above.

The notification in step 903 to reduce battery consumption of the wireless device may comprise a battery consumption pattern for the wireless device and/or a power saving level for the wireless device. Alternatively the notification in step 903 to reduce battery consumption of the wireless device can be a notification to perform a handover for the wireless device. A notification to perform a handover may comprise location information for the wireless device. The location information may be in the form of one or more locations of the wireless device obtained by a satellite positioning system receiver, and/or one or more locations of the wireless device obtained by short-range communications.

In some embodiments, the analysis node 500 may determine whether to reduce battery consumption of the wireless device based on the data received in step 901. This may comprise determining that the battery consumption is to be reduced if the battery level of the wireless device is below a threshold and/or the power mode of the wireless device is a power saving mode.

In some embodiments, the analysis node 500 may receive a subscription request from the network node 400 for recommendations for network-initiated battery saving by the network node 400. This step corresponds generally to subscription request 706 or subscription request 708 in Fig. 7.

In some embodiments, the analysis node 500 can receive location information for the wireless device. This step corresponds generally to event notification 715 in Fig. 7. The location information may comprise at least one of one or more locations of the wireless device obtained by a satellite positioning system receiver, and one or more locations of the wireless device obtained by short-range communications.

The analysis node 500 may further send a subscription request to a mobility management node for data comprising at least one of battery level of the wireless device and power mode of the wireless device. This subscription request can generally correspond to event subscription request 711 in Fig. 7.

The flow chart in Fig. 10 illustrates a method of operating a wireless device according to various embodiments. The method can be implemented by wireless device 600 as shown in Fig. 6.

In step 1001, the wireless device 600 sends data comprising at least one of battery level of the wireless device and power mode of the wireless device to a network node in a communication network that the wireless device is connected to. Step 1001 generally corresponds to battery status report 714 in Fig. 7. The network node can be a mobility management node, such as AMF 760, or an analysis node, such as NWDAF 780. In the latter case, the data may be sent via a software application executing or running on the wireless device.

In some embodiments, the wireless device 600 may send an indication to a network node in the communication network to activate network-initiated battery saving for the wireless device. The indication can be sent in a registration request. This step can generally correspond to registration request 702 in Fig. 7. In this step, the network node that the indication is sent to can be a mobility management node, such as an AMF 760.

In some embodiments, the wireless device can receive, from the network node 400, at least one of an indication to the wireless device to activate battery level reporting and an indication to the wireless device to activate power mode reporting. These indications can generally correspond to registration request response 705 in Fig. 7.

## Claims

1. A method of operating a network node in a communication network, the network node comprising a Policy Control Function, PCF, or an Access and Mobility Management Function, AMF, the method comprising:
receiving (801), from an analysis node, the analysis node comprising a Network Data Analytics Function, NWDAF, in the communication network, a notification recommending battery consumption of a wireless device that is connected to the communication network be reduced, wherein the notification to reduce battery consumption of the wireless device is a notification to perform a handover for the wireless device, wherein the notification to perform a handover comprises location information for the wireless device; and
adjusting (803) one or more aspects of the connection of the wireless device to the communication network according to the received notification.

2. A method as claimed in claim 1, wherein the method further comprises:
determining a target base station for the handover based on the received location information.

3. A method as claimed in claim 1, wherein the notification to reduce battery consumption comprises a battery consumption pattern for the wireless device and/or a power saving level for the wireless device.

4. A method as claimed in claim 3, wherein the method further comprises determining a battery saving policy to apply based on the battery consumption pattern for the wireless device and/or the power saving level for the wireless device.

5. A method of operating an analysis node, the analysis node comprising a Network Data Analytics Function, NWDAF, in a communication network, the method comprising:
receiving (901) data comprising at least one of battery level of a wireless device that is connected to the communication network and power mode of the wireless device; and
sending (903), to a network node, the network node comprising a Policy Control Function, PCF, or an Access and Mobility Management Function, AMF, in the communication network, a notification recommending battery consumption of the wireless device be reduced, wherein the notification to reduce battery consumption of the wireless device is a notification to perform a handover for the wireless device, wherein the notification to perform a handover comprises location information for the wireless device.

6. A method as claimed in claim 5, wherein the notification to reduce battery consumption of the wireless device comprises a battery consumption pattern for the wireless device and/or a power saving level for the wireless device.

7. A network node (400) for use in a communication network, the network node (400) configured to perform the method of any of claims 1-4, the network node comprising a Policy Control Function, PCF, or an Access and Mobility Management Function, AMF.

8. An analysis node (500) for use in a communication network, the analysis node (500) configured to perform the method of any of claims 5-6, the analysis node comprising a Network Data Analytics Function, NWDAF.

9. A computer program product comprising a computer readable medium having computer readable code embodied therein, the computer readable code being configured such that, when executed by a suitable computer or processor of a network node in a communication network, the network node comprising a Policy Control Function, PCF, or an Access and Mobility Management Function, AMF, the computer or processor is caused to perform the method of any of claims 1-4 or, when executed by a suitable computer or processor of an analysis node in a communication network, the analysis node comprising a Network Data Analytics Function, NWDAF, the computer or processor is caused to perform the method of any of claims 5-6.

## Patentansprüche

1. Verfahren zum Betreiben eines Netzwerkknotens in einem Kommunikationsnetzwerk, wobei der Netzwerkknoten eine Richtliniensteuerungsfunktion (Policy Control Function, PCF) oder eine Zugangs- und Mobilitätsmanagementfunktion (Access and Mobility Management Function, AMF) umfasst, wobei das Verfahren umfasst:
Empfangen (801), von einem Analyseknoten in dem Kommunikationsnetzwerk, wobei der Analyseknoten eine Netzwerkdaten-Analysefunktion (Network Data Analytics Function, NWDAF) umfasst, einer Benachrichtigung mit der Empfehlung, den Batterieverbrauch einer drahtlosen Vorrichtung, die mit dem Kommunikationsnetzwerk verbunden ist, zu reduzieren, wobei die Benachrichtigung zum Reduzieren des Batterieverbrauchs der drahtlosen Vorrichtung eine Benachrichtigung zum Durchführen eines Handovers für die drahtlose Vorrichtung ist, wobei die Benachrichtigung zum Durchführen eines Handovers Standortinformationen für die drahtlose Vorrichtung umfasst; und
Anpassen (803) eines oder mehrerer Gesichtspunkte der Verbindung der drahtlosen Vorrichtung mit dem Kommunikationsnetzwerk gemäß der empfangenen Benachrichtigung.

2. Verfahren nach Anspruch 1, wobei das Verfahren ferner umfasst:
Bestimmen einer Zielbasisstation für den Handover basierend auf den empfangenen Standortinformationen.

3. Verfahren nach Anspruch 1, wobei die Benachrichtigung zum Reduzieren des Batterieverbrauchs ein Batterieverbrauchsmuster für die drahtlose Vorrichtung und/oder eine Energiesparstufe für die drahtlose Vorrichtung umfasst.

4. Verfahren nach Anspruch 3, wobei das Verfahren ferner das Bestimmen einer anzuwendenden Batteriesparrichtlinie basierend auf dem Batterieverbrauchsmuster für die drahtlose Vorrichtung und/oder der Energiesparstufe für die drahtlose Vorrichtung umfasst.

5. Verfahren zum Betreiben eines Analyseknotens in einem Kommunikationsnetzwerk, wobei der Analyseknoten eine Netzwerkdaten-Analysefunktion (Network Data Analytics Function, NWDAF) umfasst, wobei das Verfahren umfasst:
Empfangen (901) von Daten, die mindestens eines von einem Batteriestand einer drahtlosen Vorrichtung, die mit dem Kommunikationsnetzwerk verbunden ist, und einem Energiemodus der drahtlosen Vorrichtung umfassen; und
Senden (903), an einen Netzwerkknoten in einem Kommunikationsnetzwerk, wobei der Netzwerkknoten eine Richtliniensteuerungsfunktion (Policy Control Function, PCF) oder eine Zugangs- und Mobilitätsmanagementfunktion (Access and Mobility Management Function, AMF) umfasst, einer Benachrichtigung mit der Empfehlung, den Batterieverbrauch der drahtlosen Vorrichtung zu reduzieren, wobei die Benachrichtigung zum Reduzieren des Batterieverbrauchs der drahtlosen Vorrichtung eine Benachrichtigung zum Durchführen eines Handovers für die drahtlose Vorrichtung ist, wobei die Benachrichtigung zum Durchführen eines Handovers Standortinformationen für die drahtlose Vorrichtung umfasst.

6. Verfahren nach Anspruch 5, wobei die Benachrichtigung zum Reduzieren des Batterieverbrauchs der drahtlosen Vorrichtung ein Batterieverbrauchsmuster für die drahtlose Vorrichtung und/oder eine Energiesparstufe für die drahtlose Vorrichtung umfasst.

7. Netzwerkknoten (400) zum Verwenden in einem Kommunikationsnetzwerk, wobei der Netzwerkknoten (400) konfiguriert ist, um das Verfahren nach einem der Ansprüche 1 bis 4 durchzuführen, wobei der Netzwerkknoten eine Richtliniensteuerungsfunktion (Policy Control Function, PCF) oder eine Zugangs- und Mobilitätsmanagementfunktion (Access and Mobility Management Function, AMF) umfasst.

8. Analyseknoten (500) zum Verwenden in einem Kommunikationsnetzwerk, wobei der Analyseknoten (500) konfiguriert ist, um das Verfahren nach einem der Ansprüche 5 bis 6 durchzuführen, wobei der Analyseknoten eine Netzwerkdaten-Analysefunktion (Network Data Analytics Function, NWDAF) umfasst.

9. Computerprogrammprodukt, umfassend ein computerlesbares Medium, das darin enthaltenen computerlesbaren Code aufweist, wobei der computerlesbare Code so konfiguriert ist, dass, wenn er durch einen geeigneten Computer oder Prozessor eines Netzwerkknotens in einem Kommunikationsnetzwerk ausgeführt wird, wobei der Netzwerkknoten eine Richtliniensteuerungsfunktion (Policy Control Function, PCF) oder eine Zugangs- und Mobilitätsmanagementfunktion (Access and Mobility Management Function, AMF) umfasst, der Computer oder Prozessor dazu veranlasst wird, das Verfahren nach einem der Ansprüche 1 bis 4 durchzuführen, oder dass, wenn er durch einen geeigneten Computer oder Prozessor eines Analyseknotens in einem Kommunikationsnetzwerk ausgeführt wird, wobei der Analyseknoten eine Netzwerkdaten-Analysefunktion (Network Data Analytics Function, NWDAF) umfasst, der Computer oder Prozessor dazu veranlasst wird, das Verfahren nach einem der Ansprüche 5 bis 6 durchzuführen.

## Revendications

1. Procédé de fonctionnement d'un nœud de réseau dans un réseau de communication, le nœud de réseau comprenant une fonction de commande des politiques, PCF, ou une fonction de gestion de l'accès et de la mobilité, AMF, le procédé comprenant :
la réception (801), à partir d'un nœud d'analyse, le nœud d'analyse comprenant une fonction d'analyse de données de réseau, NWDAF, dans le réseau de communication, d'une notification recommandant de réduire la consommation de la batterie d'un dispositif sans fil qui est connecté au réseau de communication, dans lequel la notification de réduction de la consommation de la batterie du dispositif sans fil est une notification de réalisation d'un transfert intercellulaire pour le dispositif sans fil, dans lequel la notification de réalisation d'un transfert intercellulaire comprend des informations d'emplacement pour le dispositif sans fil ; et
l'ajustement (803) d'un ou plusieurs aspects de la connexion du dispositif sans fil au réseau de communication selon la notification reçue.

2. Procédé selon la revendication 1, dans lequel le procédé comprend en outre :
la détermination d'une station de base cible pour le transfert intercellulaire sur la base des informations d'emplacement reçues.

3. Procédé selon la revendication 1, dans lequel la notification de réduction de la consommation de la batterie comprend un modèle de consommation de la batterie pour le dispositif sans fil et/ou un niveau d'économie d'énergie pour le dispositif sans fil.

4. Procédé selon la revendication 3, dans lequel le procédé comprend en outre la détermination d'une politique d'économie de la batterie à appliquer sur la base du modèle de consommation de la batterie pour le dispositif sans fil et/ou du niveau d'économie d'énergie pour le dispositif sans fil.

5. Procédé de fonctionnement d'un nœud d'analyse, le nœud d'analyse comprenant une fonction d'analyse de données de réseau, NWDAF, dans un réseau de communication, le procédé comprenant :
la réception (901) de données comprenant au moins l'un parmi un niveau de batterie d'un dispositif sans fil connecté au réseau de communication et un mode d'alimentation du dispositif sans fil ; et
l'envoi (903), à un nœud de réseau, le nœud de réseau comprenant une fonction de commande des politiques, PCF, ou une fonction de gestion de l'accès et de la mobilité, AMF, dans le réseau de communication, d'une notification recommandant de réduire la consommation de la batterie du dispositif sans fil, dans lequel la notification de réduction de la consommation de la batterie du dispositif sans fil est une notification de réalisation d'un transfert intercellulaire pour le dispositif sans fil, dans lequel la notification de réalisation d'un transfert intercellulaire comprend des informations d'emplacement pour le dispositif sans fil.

6. Procédé selon la revendication 5, dans lequel la notification de réduction de la consommation de la batterie du dispositif sans fil comprend un modèle de consommation de la batterie pour le dispositif sans fil et/ou un niveau d'économie d'énergie pour le dispositif sans fil.

7. Nœud de réseau (400) destiné à être utilisé dans un réseau de communication, le nœud de réseau (400) étant configuré pour réaliser le procédé selon l'une quelconque des revendications 1 à 4, le nœud de réseau comprenant une fonction de commande des politiques, PCF, ou une fonction de gestion de l'accès et de la mobilité, AMF.

8. Nœud d'analyse (500) destiné à être utilisé dans un réseau de communication, le nœud d'analyse (500) étant configuré pour réaliser le procédé selon l'une quelconque des revendications 5 à 6, le nœud d'analyse comprenant une fonction d'analyse de données de réseau, NWDAF.

9. Produit-programme informatique comprenant un support lisible par ordinateur dans lequel est incorporé un code lisible par ordinateur, le code lisible par ordinateur étant configuré de telle sorte que, lorsqu'il est exécuté par un ordinateur ou un processeur approprié d'un nœud de réseau dans un réseau de communication, le nœud de réseau comprenant une fonction de commande des politiques, PCF, ou une fonction de gestion de l'accès et de la mobilité, AMF, l'ordinateur ou le processeur est amené à réaliser le procédé selon l'une quelconque des revendications 1 à 4 ou que, lorsqu'il est exécuté par un ordinateur ou un processeur approprié d'un nœud d'analyse dans un réseau de communication, le nœud d'analyse comprenant une fonction d'analyse de données de réseau, NWDAF, l'ordinateur ou le processeur est amené à réaliser le procédé selon l'une quelconque des revendications 5 à 6.
